**Europäisches Patentamt**

(19) **European Patent Office**

**Office européen des brevets**

(11) Publication number: **0 101 206**
**B1**

(12) **EUROPEAN PATENT SPECIFICATION**

(45) Date of publication of patent specification: **04.05.88**

(21) Application number: **83304202.1**

(22) Date of filing: **20.07.83**

(51) Int. Cl.⁴: **F 02 C 3/16,** F 02 C 5/00,
F 02 C 5/02, F 02 C 7/18

(54) **High compression gas turbine engine.**

(30) Priority: **22.07.82 US 400759**

(43) Date of publication of application:
**22.02.84 Bulletin 84/08**

(45) Publication of the grant of the patent:
**04.05.88 Bulletin 88/18**

(84) Designated Contracting States:
**DE FR GB IT SE**

(56) References cited:
**DE-A-2 311 566**
**DE-C- 522 435**
**GB-A- 220 307**
**US-A-2 928 239**
**US-A-3 899 874**
**US-A-4 241 576**

(73) Proprietor: **Skoczkowski, Andrzej Mariej**
**919 N. Campbell Avenue**
**Chicago Illinois 60622 (US)**
(73) Proprietor: **Rychlak, Andrew Peter**
**3300 S. Central Avenue**
**Chicago Illinois 60638 (US)**

(72) Inventor: **Skoczkowski, Andrzej Mariej**
**919 N. Campbell Avenue**
**Chicago Illinois 60622 (US)**
Inventor: **Rychlak, Andrew Peter**
**3300 S. Central Avenue**
**Chicago Illinois 60638 (US)**

(74) Representative: **Spoor, Brian**
**c/o E.N. LEWIS & TAYLOR 144 New Walk**
**Leicester, LE1 7JA (GB)**

Courier Press, Leamington Spa, England.

## Description

The present invention relates to a high compression gas turbine engine.

Conventional internal combustion engines are well known. Improvements of such engines naturally led to the development of the gas turbine engine. The principal advantage of the gas turbine engine is a favourable "gravity power index", i.e. weight to power (kg/kw) ratio, which has made such engines particularly adaptable to aircraft application.

On the other hand, the application of a gas turbine engine to land craft, such as automobiles, requires extensive use of expensive and bulky heat exchangers. This not only complicates the construction and increases the weight of the engine, but it prohibitively increases the cost of such engines.

The maximum efficiency of both piston engines and gas turbine engines is between 30% and 40%; the remaining chemical energy of the fuel is wasted.

Of major consequence is the large efficiency drop of a gas turbine engine under partial load conditions, and therefore it is not of preferred application to land vehicles.

This invention is directed to providing a novel gas turbine engine which can be constructed of relatively inexpensive materials and provides a high output beyond that of conventional gas turbines.

The invention comprehends a novel arrangement of components which utilize the chemical energy of the fuel in a more efficient manner than heretofore contemplated, and thus consumes relatively low amounts of fuel.

The invention is concerned with providing a gas turbine engine which has a novel cooling arrangement such as will maintain the internal cycle temperature between 1800°C and 2000°C, by introducing blasts of cool air throughout its inner segments.

The invention also has for its object the provision of a simple, compact and light engine.

The invention contemplates providing a novel gas turbine engine which is readily applicable to automobiles, trucks, motor boats and also aircraft.

The invention further contemplates the production of the novel engine from lightweight materials such as aluminium for the engine housing, etc.

The novel engine is of simple construction and eliminates such conventional components as heat exchangers, and preferably runs on diesel fuel. There is no need for oil changes as in piston engines and the only lubrication required is that of the shaft bearings.

US—A—3 899 874 discloses a gas turbine engine comprising means for directing compressed air from a preheating chamber to dilute the exhaust gases for more complete combustion or to exhaust outlets to scavenge spent gases, and a rotary power output shaft driven by said rotor. DE—A—2 311 566 discloses a gas turbine engine in which compressed air is used for scavenging spent gases and additionally for cooling the turbine.

US—A—4 241 576 discloses a known gas turbine engine comprising a housing, means for generating high pressure hot combustion gases comprising a vaned power rotor with chambers having air inlets and outlets, and which provide combustion chambers. Stator and driven rotor means define passages for conducting said hot combustion gases for powering said driven rotor which is coupled in driving relation to the power rotor. An air inlet collar controls the fresh air inlet to the inter-vane chambers and gas collector means controls the communication between the inter-vane chambers and said stator and driven rotor means. Each of said inter-vane chambers sequentially undergoes a high pressure air compression stage, a fuel injected combustion stage and an exhaust stage for delivering said high pressure hot combustion gases for driving the driven rotor means.

The present invention is characterized by a rotary power output shaft in said housing coupled in driven relation to said driven rotor means and by a purging stage being realised by an angular offset of said gas collector means relative to said air inlet collar such that, during a fresh air intake stage, there is a preset angle in which said gas collector means provide a communication between the inter-vane chambers and the stator and driven rotor means, whereby fresh cooling air, at ambient temperature and uncontaminated with combustion products, is delivered to said stator and driven rotor means and passes therethrough and to exhaust, and thereafter a wall of said gas collector means closes off said communication when the chambers are filled with air and enter said compression stage.

The invention will now be described further by way of example with reference to the accompanying drawings, in which:—

Figure 1 is an elevational view partly in cross-section of an engine in accordance with the invention, taken from the inlet end thereof; and

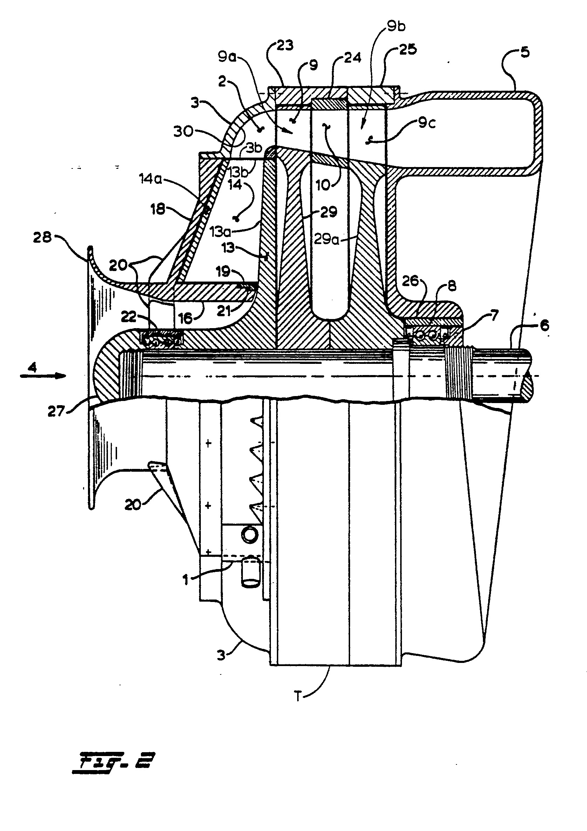

Figure 2 is a side elevational view, partly in axial section.

The engine, generally designated R, comprises a housing T which has a forwardly flaring tubular air inlet collar 28 at its forward end. The air inlet collar 28 is notched at its rear end and comprises a pair of circumferentially spaced flange rings 16, 16 about which there are two resilient half ring gaskets 19, which are biased by two flat springs 21, against a radially extending opposing side wall 13a of a power or gas generator rotor 13.

Air is aspirated into chambers 15 of the power rotor 13 through the air intake 4 and through diametrically spaced notches K formed between the ends of the split flange rings 16, 16. The air inlet collar 28 is held concentric with the axis of the rotor 13 by means of four or more tear shaped bearing seat

2

supports 20 which protrude between the air inlet collar 28 and a face plate cover 18. The face plate cover 18 along with the air inlet collar 28 and with the bearing seat supports 20 form a pressure casting.

The rotor has a forwardly extending hub which projects into the air inlet collar 28 and is sleeved on to an output shaft 6 and. made fast thereto in any conventional manner.

The rotor 13 has a plurality of radially extending chambers 15 which provide combustion chambers and are defined by an annular front wall 14a and a series of circumferentially spaced radial vanes 14 which connect the wall 14a with rotor wall 13a. It will be apparent that the wall 14a converges outwardly with the wall 13a toward the outlet ends 13b of the rotor 13. The outlet ends 13b lead into gas collectors 3, which are fastened to the face plate 18 and to rings 23 and 25 and to an exhaust manifold 5.

The collectors 3 comprise a circumferentially spaced series of blades 2 which form passages 30. The blades 2 provide inlets 3b of the collectors 3 communicating with the outlet ends 13b of the chambers 15 of the rotor 13 and direct high pressure exhaust gases from main combustion chambers 15 through a series of axially directed passages 9a defined by blades 9 in a first or front turbine rotor 29. The rotor 29 is fastened to the shaft 6.

The gases are directed by the turbine blades 9 against guide vanes 10 of a stator ring 24 disposed coaxially with the front rotor 29 and a rear rotor 29a. Subsequently gases continue discharge against turbine blades 9c of the rear rotor 29a which also is fastened to the shaft 6.

The passages 9b, defined by blades 9c, in the rear rotor 29a discharge the gases into the annular exhaust manifold 5 which is supported by a bearing assembly 26, which is held on the main shaft 6 by a nut 7.

The parts are set on the main shaft 6 in the following order, namely an aerodynamic protective hood 27, bearing 22, the power rotor 13, the two turbine rotors 29, 29a and the bearing 6.

Description of engine operation

In operation, the engine is started by cranking the shaft 6 with an electric starter coupled thereto in conventional manner, just as in a diesel engine.

As the engine is rotated, air is aspirated through the air intake 4 and diverted through the notches K into rotating main combustion chambers 15.

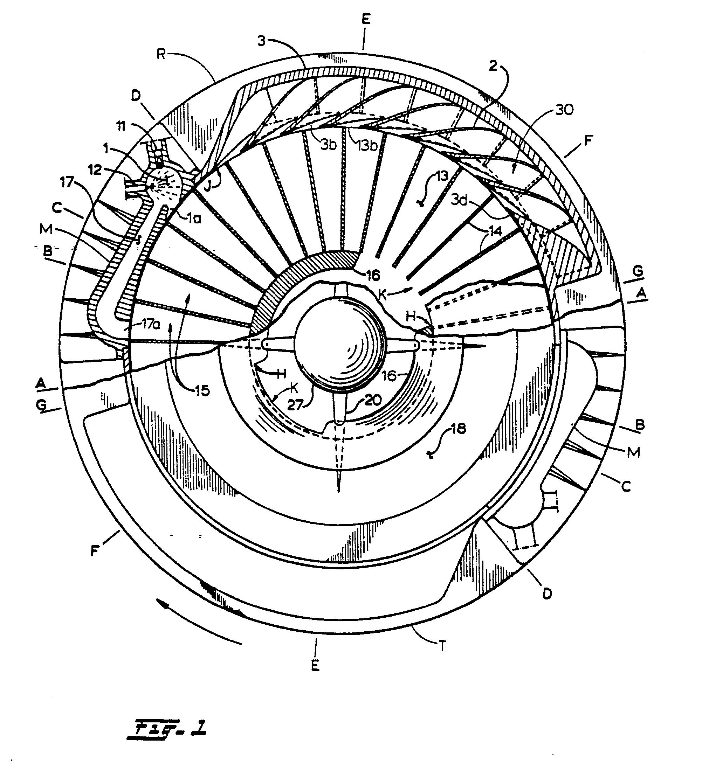

As best seen in Figure 1, the air enters that section of the chambers 15 located in the sector E—G of the engine circumference. At the same time in the E—F sector this air being at ambient temperature is accelerated radially outwardly by centrifugal force, cools the walls of the components through which it passes; which means the walls of the main combustion chambers 15, the walls of the collector 3, collector vanes 2, turbine blades 9, 9c and guide vanes 10. This purging stage comprises the internal cooling of the engine.

When the segment of the rotor 13 advances to position F—G, this accelerated air stream is suddenly trapped at the outer ends of the rotor chambers 15 by the wall 3d of the collector 3. This causes the effect of aerodynamic compression in the combustion chambers 15.

At point H, the rotating chambers 15 are closed at the side of the air inlet by the split flange ring 16 and contain compressed air, and there is thus created so-called rotational closed combustion chambers. This is termed the primary compression sector.

As this section of the chambers 15 with air under primary compression moves to sector A—B, their radially outer ends 13b sequentially align radially with a gas port 17a of a first passageway 17, through which burning gases are introduced into the chambers 15 via the passage 17 in a manifold M, which leads to a precombustion gas chamber 1 into which atomized fuel is introduced through a fuel injector 12, and which is initially ignited by a glow plug 11. The chamber 1 has a port 1a of a second passageway in the manifold M which communicates with the passing main combustion chamber 15.

It will be observed that between points A—B burning gases are forced under pressure of many atmospheres from the gas chamber 1 through the passageway 17 and port 17a to combustion chambers 15. In this segment of engine operation secondary compression follows and secondary combustion with amply oxygen-rich compressed air begins. Between B and C the combustion maximizes causing further increase in pressure and temperature. This combustion occurs at constant volume of the chambers 15.

Since there is an excess of oxygen in the compressed air part of it is not consumed and remains in the exhaust gases. In the engine sector C—D, part of the exhaust gases are forced dynamically into the gas chamber 1 where the fuel injector continuously injects atomized fuel, which because of the high temperature, about 2000°C, of the exhaust gases with the included small amount of oxygen, causes the fuel to vaporize and self ignite, which burning fuel is forced through channel 17 and ports 17a into the combustion chambers 15 as they pass the port 17a.

The sector D—E is where the highly compressed gases are discharged through the passages 30 in the collectors 3 into the front turbine blades 9, the guide vanes 10 and the rear turbine blades 9c, and discharge into the exhaust manifold 5.

The kinetic energy of the exhaust gases effected by high pressure difference is converted into work done at the turbine blades 9c, causing the turbines 29, 29a to rotate.

At point E of the engine circumference, the pressure of the exhaust gases in the combustion chambers is very near to atmospheric pressure. Thereafter the exhausted chambers 15 align with the appropriate notch K. Fresh air is then aspirated into these chambers 15 and the engine cycle is repeated.

3

It will be appreciated that during one full turn two functions are effected. On the E—G sector the rotor 13 works as a centrifugal compressor, while in the other parts of the circumference the rotor inter-vane chambers 15 act as combustion chambers. Thus in a full rotation, there are two complete working cycles.

In low gear and under partial load conditions, the engine maintains a high compression ratio and cycle temperature, which allows it to retain high efficiency. This is a fundamental feature for a basic application of this type of gas turbine engine to various automotive vehicles.

Theoretical calculations of the cycle efficiency are as follows:

Specification of engine activity

Theoretical calculations of cycle efficiency depends upon a given degree of compression and cycle termperature illustrated in our correlative table. Here is a list of definitions of symbols used with the table—

$P_1$—Atmospheric Pressure=1 AT or (One Technical ATM)

$T_1$—293°K=(20°C) Ambient Temp.

X—1.4 Gas Constant

$$\pi = \frac{P_2}{P_1} - \text{Compression Ratio (Pressure Ratio During Compression)}$$

$\lambda$—Pressure Ratio During Burnout

$T_2$—Max. Cycle Temperature

$\eta_t$—Cycle Efficiency

$$\Delta P = P_2 \frac{T_2 - T_1}{T_1} - \text{Pressure Gain (Increase)}$$

$P_2$—Total Increase in Compression

| | a | b | c | d | e | f | g | h | i |
|---|---|---|---|---|---|---|---|---|---|
| | Primary dynamic compression | Secondary compression | Total increase in compression $P_2$ (kg/cm²) | Maximum cycle compression $\Delta P$ (kg/cm²) | Initial work pressure on the turbine (kg/cm²) | Maximum cycle temperature (°C) | Pressure ratio during burnout $\lambda$ | Cycle temperature $T_2$ (°K) | Cycle efficiency $\eta_t$ $1-X\dfrac{1}{\pi^{X-1/X}}\dfrac{\lambda^{1/X}-1}{\lambda-1}$ |
| | Imposed values | Imposed values | $a+b$ | $P_2\dfrac{T_2-T_1}{T_1}$ | $d-b$ | Imposed values | $d\div c$ | $f+273°C$ | |
| 1 | 1 | 1 | 2 | 3.3 | 2.3 | 500°C | 1.6 | 773°K | 0.24 |
| 2 | 1 | 2 | 3 | 4.9 | 2.9 | " | 1.6 | " | 0.32 |
| 3 | 2 | 2 | 4 | 6.6 | 4.5 | " | 1.6 | " | 0.37 |
| 4 | 2 | 3 | 5 | 8.2 | 5.1 | " | 1.6 | " | 0.41 |
| 5 | 3 | 2 | 5 | 8.2 | 6.1 | " | 1.6 | " | 0.41 |
| 6 | 1 | 2 | 3 | 8.0 | 5.0 | 800°C | 2.6 | 1,073°K | 0.37 |
| 7 | 2 | 2 | 4 | 10.6 | 8.6 | " | 2.5 | " | 0.42 |
| 8 | 2 | 3 | 5 | 13.3 | 8.3 | " | 2.6 | " | 0.46 |
| 9 | 3 | 2 | 5 | 13.3 | 11.3 | " | 2.6 | " | 0.46 |
| 10 | 3 | 3 | 6 | 16.0 | 13.0 | " | 2.7 | " | 0.49 |
| 11 | 4 | 3 | 7 | 18.6 | 15.6 | " | 2.6 | " | 0.51 |
| 12 | 5 | 4 | 9 | 24.0 | 20.0 | " | 2.7 | " | 0.55 |
| 13 | 5 | 5 | 10 | 26.6 | 21.6 | " | 2.6 | " | 0.56 |
| 14 | 2 | 2 | 4 | 13.4 | 13.0 | 1,000°C | 3.2 | 1,273°K | 0.45 |
| 15 | 3 | 3 | 6 | 20.0 | 14.0 | " | 3.3 | " | 0.51 |
| 16 | 4 | 4 | 8 | 27.0 | 23.0 | " | 3.4 | " | 0.55 |

| | a | b | c | d | e | f | g | h | i |
|---|---|---|---|---|---|---|---|---|---|
| | Primary dynamic compression | Secondary compression | Total increase in compression $P_2$ (kg/cm²) | Maximum cycle compression $\Delta P$ (kg/cm²) | Initial work pressure on the turbine (kg/cm²) | Maximum cycle temperature (°C) | Pressure ratio during burnout $\lambda$ | Cycle temperature $T_2$ (°K) | Cycle efficiency $\eta_t$ |
| | Imposed values | Imposed values | $a+b$ | $\dfrac{T_2-T_1}{T_1}\,P_2$ | $d-b$ | Imposed values | $d\div c$ | $f+273°C$ | $1-X\dfrac{1}{\pi^{X-1/X}}\dfrac{\lambda^{1/X}-1}{\lambda-1}$ |
| 17 | 5 | 5 | 10 | 33.4 | 28.4 | 1,000°C | 3.3 | 1,273°K | 0.58 |
| 18 | 5 | 8 | 13 | 43.5 | 35.5 | " | 3.3 | " | 0.61 |
| 19 | 5 | 10 | 15 | 50.0 | 40.0 | " | 3.3 | " | 0.62 |
| 20 | 2 | 3 | 5 | 25.3 | 22.3 | 1,500°C | 5.0 | 1,773°K | 0.52 |
| 21 | 5 | 5 | 10 | 60.5 | 50.5 | " | 5.0 | " | 0.61 |
| 22 | 5 | 10 | 15 | 76.0 | 66.0 | " | 5.0 | " | 0.65 |
| 23 | 5 | 15 | 20 | 101.0 | 86.0 | " | 5.0 | " | 0.68 |
| 24 | 5 | 20 | 25 | 126.0 | 101.0 | " | 5.0 | " | 0.70 |
| 25 | 5 | 5 | 10 | 60.75 | 55.7 | 1,800°C | 6.0 | 2,073°K | 0.62 |
| 26 | 5 | 10 | 15 | 91.0 | 81.0 | " | 6.0 | " | 0.66 |
| 27 | 5 | 5 | 10 | 67.5 | 62.5 | 2,000°C | 6.7 | 2,273°K | 0.63 |
| 28 | 5 | 10 | 15 | 101.0 | 91.0 | " | 6.7 | " | 0.67 |
| 29 | 5 | 5 | 10 | 74.0 | 69.0 | 2,200°C | 7.4 | 2,473°K | 0.64 |
| 30 | 5 | 10 | 15 | 111.0 | 101.0 | " | 7.4 | " | 0.68 |

**0 101 206**

Ignition system

The present new diesel gas turbine engine has two separate ignition systems. Each of them consists of one gas ignition chamber 1, one fuel injector 12 and a glow plug 11. In this construction of high compression engine use has been made of a conventional glow plug, which is commonly used in most high compression diesel engines.

The glow plugs 11 are switched on before starting the engine and remain on only until the gas is fired and the engine starts, and thereafter the glow plugs are turned off. The fuel injectors inject the fuel under high pressure in an atomized state directly into the gas ignition chambers 1. This process of fuel injection continues until the engine is turned off. The gas ignition chambers 1 are very important components of this particular embodiment of the invention. Their parameters have very considerable influence on engine performance. In the gas ignition chambers 1 phase 1 of the ignition process called "delayed combustion" takes place. Here, a condition of temperature and pressure results in which a slow burn of the fuel occurs, because of the low oxygen content.

The high pressure exhaust gases entering the chamber 1 through port 1a transfer the slow burning gas mixture through the gas passageway 17 and port 17a into the main combustion chambers 15. At the same time, the oncoming combustion chambers 15 are being filled with pressurized cool oxygen-rich air. When the two mixtures of gas and air meet in the main combustion chambers 15 there is deflagration ignition and increase in temperature and compression of gases under constant volume.

In the instant gas turbine engine, due to high activity of chemical processes, which begins in the gas ignition chambers 1, the temperature, which is high, and pressurized oxygen-rich air, causes combustion many times faster in the main combustion chambers 15 than in any other conventional combustion engine. By selecting suitable dimensions for the cross-sections of the gas chamber passages, it is possible widely to vary the secondary compression ratio in conjunction with the fuel used and the purpose of the engine.

**Claims**

1. A gas turbine engine comprising a housing, means for generating high pressure hot combustion gases comprising a vaned power rotor with inter-vane chambers which have inlets for fresh air and outlets, and which provide combustion chambers, stator and driven rotor means defining passages for conducting said hot combustion gases for powering said driven rotor means which is coupled in driving relation to said power rotor, an air inlet collar for controlling the fresh air inlet to the inter-vane chambers and gas collector means controlling the communication between the inter-vane chambers and said stator and driven rotor means, wherein each of said inter-vane chambers sequentially undergoes a high pressure air compression stage, a fuel injected combustion stage and an exhaust stage for delivering said high pressure hot combustion gases for driving the driven rotor means, characterised by a rotary power output shaft in said housing coupled in driven relation to said driven rotor means and by a purging stage being realised by an angular offset of said gas collector means relative to said air inlet collar such that, during a fresh air intake stage, there is a preset angle in which said gas collector means provide a communication between the inter-vane chambers and the stator and driven rotor means, whereby fresh cooling air, at ambient temperature and uncontaminated with combustion products, is delivered to said stator and driven rotor means (2, 10; 29, 29a) and passes therethrough and to exhaust, and thereafter a wall of said gas collector means closes off said communication when the chambers are filled with air and enter said compression stage.

2. An engine according to claim 1, characterized by a pre-combustion chamber (1) with first and second passageways (17a, 1a) spaced circumferentially of the engine radially outwardly of said power rotor (13) and positioned so that each chamber (15), after leaving said air compression state, communicates sequentially with said chamber (1) through said first passageway (17a) and then through said second passageway (1a), and a fuel injector (12) for injecting fuel into said chamber (1).

3. An engine according to claim 2, characterized by means (M) which close off the circumferential outlets of said chambers (15) during a primary combustion or secondary compression stage whilst passing between said first passageway (17a) and said second passageway (1a), after passing said second passageway (1a) the chambers (15) remaining momentarily closed off before communicating with said stator and driven rotor means (2, 10; 29, 29a) during said exhaust stage.

4. An engine according to any one of the preceding claims, characterized in that said chambers (15) are arranged to aspirate ambient air thereinto through the radially inner ends thereof.

**Patentansprüche**

1. Gasturbinenmotor, mit einem Gehäuse, mit Mitteln zum Erzeugen hoch verdichteter heißer Verbrennungsgase, die einen mit Leitschaufeln versehenen Antriebsrotor mit zwischen den Leitschaufeln befindlichen Kammern besitzen, welche Einlässe für Frischluft und Auslässe haben und die Verbrennungskammern bilden, mit einem Stator und angetriebenen Rotormitteln, welche Durchgänge zum Weiterleiten der heißen Verbrennungsgase und damit zum Antreiben der angetriebenen Rotormittel, welche mit dem Antriebsrotor antriebsmäßig gekoppelt sind, bilden, mit einem Lufteinlaßstutzen zum Steuern des Frischlufteinlasses in die zwischen den Leitschaufeln befindlichen Kammern und mit Gassammel-Mitteln

7

zum Steuern der Verbindung zwischen den innerhalb der Leitschaufeln befindlichen Kammern und dem Stator und den angetriebenen Rotormitteln, wobei jede der zwischen den Leitschaufeln befindlichen Kammern sequentiell einem Stadium hoch verdichteter Luft, einem Kraftstoff-Einspritz-Verbrennungsstadium und einem Auspuffstadium zum Weiterleiten der hoch verdichteten heißen Verbrennungsgase zum Antreiben der angetriebenen Rotormittel unterzogen ist, gekennzeichnet durch eine rotierende Abtriebswelle in dem Gehäuse, welche mit den angetriebenen Rotormitteln antriebsmäßig gekoppelt ist und durch ein Reinigungsstadium, welches durch einen winkligen Versatz der Gassammelmittel gegenüber dem Lufteinlaßstutzen realisiert ist, derart, daß während eines Frischluft-Ansaugstadiums ein vorgegebener Winkel besteht, in welchem die Gassammlermittel eine Verbindung zwischen den innerhalb der Leitschlaufen liegenden Kammern und dem Stator und den angetriebenen Rotormitteln herstellen, wodurch frische, Umgebungstemperatur aufweisende und nicht mit Verbrennungsprodukten verschmutzte Kühlluft dem Stator und den angetriebenen Rotormittel (2, 10; 29, 29a) zugeführt und dort hindurchgeführt und ausgeblasen wird, und danach eine Wand der Gassammlermittel diese Verbindung dann verschließt, wenn die Kammern mit Luft gefüllt sind und in das Kompressionsstadium eintreten.

2. Motor nach Anspruch 1, gekennzeichnet durch eine Vorverbrennungskammer (1) mit ersten und zweiten Durchgängen (17a, 1a), die umfangsseitig an der Maschine im Abstand angeordnet und vom Antriebsrotor (13) radial nach außen gerichtet und so angeordnet sind, daß jede Kammer (15) nach Verlassen des Luftverdichtungsstadiums sequenziell mit der Kammer (1) über den ersten Durchgang (17a) und dann über den zweiten Durchgang (1a) in Verbindung ist, und durch eine Brennstoff-Einspritz-Vorrichtung (12) zum Einspritzen von Brennstoff in die Kammer (1).

3. Motor nach Anspruch 2, gekennzeichnet durch Mittel (M), die die umfangsseitigen Auslässe der Kammern (15) während eines Primärverbrennungs- oder Sekundär-Verdichtungsstadiums und während sie sich zwischen dem ersten Durchgang (17a) und dem zweiten Durchgang (1a) bewegen, verschließen, wobei die Kammern (15), nachdem sie den zweiten Durchgang (1a) passiert haben, momentan verschlossen bleiben, bevor sie mit dem Stator und den angetriebenen Rotormitteln (2, 10; 29, 29a) während des Auspuffstadiums in Verbindung sind.

4. Motor nach einem der vorangehenden Ansprüche, dadurch gekennzeichnet, daß die Kammern (15) so angeordnet sind, daß sie Umgebungsluft durch ihre radial innenliegenden Enden ansaugen.

## Revendications

1. Moteur à turbine à gaz comprenant un logement, des moyens pour produire des gaz de combustion chauds à pression élevée, comprenant un rotor de puissance à ailettes avec des chambres inter-ailettes qui comportent des entrées pour l'air frais et des sorties, et qui fournissent des chambres de combustion, un stator et un rotor entraîné définissant des passages pour l'amenée des gaz de combustion chauds pour l'alimentation du rotor entraîné qui est accouplé en relation d'entraînement au rotor de puissance, un collier d'entrée d'air destiné à réguler l'entrée d'air frais aux chambres inter-ailettes et des moyens collecteurs de gaz régulant la communication entre les chambres inter-ailettes et le stator et le rotor entraîné, dans lequel chacune des chambres inter-ailettes subit séquentiellement une étape de compression d'air à haute pression, une étape de combustion par injection de carburant et une étape d'échappement destinée à fournir les gaz de combustion chauds à pression élevée pour l'entraînement du rotor entraîne, caractérisé par un arbre de sortie de puissance rotatif dans le logement accouplé en relation, entraînée au rotor entraîné et par une étape de purge réalisée par décalage angulaire des moyens collecteurs de gaz par rapport au collier d'entrée d'air, de sorte que lors de l'étape d'admission d'air frais, il existe un angle préétabli dans lequel les moyens collecteurs de gaz fournissant une communication entre les chambres inter-ailettes et le rotor et le rotor entraîné, grâce à quoi l'air de refroidissement frais, à température ambiante et sans être contaminé par des produits de combustion, peut être amené au stator et au rotor entraîné (2, 10; 29, 29a) et traverse ceux-ci en direction de l'échappement, et après quoi une paroi du moyen collecteur de gaz ferme la communication lorsque les chambres sont remplies d'air et entrent dans l'étage de compression.

2. Moteur selon la revendication 1, caractérisé par une chambre de précombustion (1) munie de premier et de second passages (17a, 1a) espacés circonférentiellement du moteur radialement vers l'extérieur du rotor de puissance (13) et positionnés de façon que chaque chambre (15), après avoir quitté l'état de compression d'air, communique séquentiellement avec la chambre (1) à travers un premier passage (17a) et ensuite par un second passage (1a), et un injecteur de carburant (12) destiné à injecter le carburant dans la chambre (1).

3. Moteur selon la revendication 2, caractérisé par des moyens (M) qui ferment les sorties circonférentielles des chambres (15) pendant une étape de combustion primaire ou de compression secondaire tout en passant entre le premier passage (17a) et le second passage (1a), après avoir passé le second passage (1a), les chambres (15) restent momentanément fermées avant de communiquer avec le stator et le rotor entraîné (2, 10; 29, 29a) pendant l'étape d'échappement.

4. Moteur selon l'une quelconque des revendications précédentes, caractérisé en ce que les chambres (15) sont disposées de façon à aspirer l'air ambiant dans celles-ci à travers les extrémités radialement intérieures de celles-ci.

$\overline{Fig.\ 1}$

_Fig. 2_